# EUROPEAN PATENT SPECIFICATION

(11) **EP 1 956 350 B1**
(45) Date of publication and mention of the grant of the patent: **21.12.2016**
(21) Application number: 06804987.3
(22) Date of filing: 19.10.2006
(51) Int. Cl.: B22D 11/20, G01F 23/288

(54) **A MOLTEN STEEL LEVEL MEASURING INSTRUMENT WITH A LONG SCINTILLATOR**
SCHMELZSTAHLPEGELMESSINSTRUMENT MIT EINEM LANGEN SZINTILLATOR
INSTRUMENT DE MESURE DU NIVEAU D'ACIER FONDU MUNI D'UN SCINTILLATEUR LONG

(30) Priority: 04.11.2005 CN 200510119746
(43) Date of publication of application: 13.08.2008
(73) Proprietor: Tian, Zhiheng, Hunan 421001 (CN)
(72) Inventor: TIAN, Zhiheng, Hunan 421001 (CN); JIANG Hong, Hengyang, Hunan 421001 (CN)
(74) Representative: Regimbeau
(86) International application number: PCT/CN2006/002772
(87) International publication number: WO 2007/051396

(56) References cited:
- EP-A1- 0 658 747
- EP-A1- 0 971 243
- CN-A- 1 632 614
- CN-Y- 2 355 834
- CN-Y- 2 493 944
- GB-A- 888 927
- GB-A- 893 505
- JP-A- 62 199 252
- US-A- 4 520 266
- US-A- 4 520 266

## Description

### Field of the Invention

The present invention relates to a molten steel level measuring device for a continuous casting machine mold.

### Background of the Invention

A molten steel level measuring device for a continuous casting machine mold usually adopts a sodium iodide scintillation crystal (scintillator) as a receiver. Generally, the sodium iodide scintillator is a cylinder of end-window type. Specifically, the cylindrical sodium iodide scintillator has magnesia powder which is applied on the cylindrical surface and one end of the cylinder as a photon reflective layer, and has a metal casing sheltering the cylindrical surface and the one end. On the other end of the cylinder, silicon gel or a gel sheet is applied and a glass enclosure is installed thereon as an emission window (i.e. end window) for the photons generated by the scintillator. The scintillator is connected to a light guide outside the end-window, a photo-multiplier and an electronic circuit board in tandem within the shell of a receiver to form the receiver. Generally, the receiver is a cylinder and is installed in the mold water chamber with the axis of the cylinder in approximately horizontal orientation. In order to improve the sensitivity and measurement range of the measurement of the molten steel level in the mold, in document US5564487A, a large naked sodium iodide scintillation crystal whose long axis is vertically mounted in a mold water chamber is used as a detector, where the crystal has gel applied on the surface as light transmission and shock absorption materials; the interior of a metal housing is used as a reflective layer, where the metal housing is a part of the receiver shell; the photon emission window also uses gel as light transmission and shock absorption materials. However, there are disadvantages including: the interior of the metal housing shows poor efficiency in reflecting photons, the surface of the gel light guide can be contaminated easily and difficult to be cleaned, the structure and assembly of the receiver is relatively complicated and thus hard to be applied in wide range.

Document US 4520266A discloses a device for monitoring the free surface of a fluid dense to particular ionizing radiations and contained within a vessel. The device includes a radio active source positioned on one side of the vessel and a detector positioned on the side which includes a photo-multiplier having a photo cathode coupled to a phosphor scintillator of sufficient length to cover the predicted range of movement of the liquid free surface.

Document EP0658747A1 discloses a continuous casting mold comprising a mold tube and that the scintillating crystal 288, lightpipe 280 and detector 234, and the gamma radioactive source 232 are arranged in a mold water chamber 250.

GB893505A discloses scintillometer component including an end window 8 and a reflective coasting 4.

### Summary of the Invention

The objective of the present invention is to provide a molten steel level measuring device for a continuous casting machine mold. The molten steel level measuring device, which can be mounted comfortably within the limited interior space of the mold water chamber, adopts a long scintillator of high photon collection efficiency as the detector and is easy to be manufactured and assembled. Hence the measurement sensitivity can be enhanced and the full molten steel level measurement range can be covered.

The objective of the present invention is achieved by adopting a long scintillator of side-window type as a detector in a receiver, wherein the long scintillator is equipped with a reflective layer including magnesia mainly and a glass window on one side wall.

The long scintillator of side-window type can be divided into two sections along the side window. For the longer section without the side window and the two ends of the long scintillator, magnesia is used as the reflective layer; for the shorter section with the side window, fluorine plastic is used as the reflective layer of the cylindrical surface.

According to an aspect of the present invention, a long axis of the long scintillator of side-window type is mounted vertically in the mold water chamber, magnesia is mainly used as the reflective layer of the long scintillator and a glass window is provided on one side wall. The photon emission window of the long scintillator of side-window type is connected to a photo-multiplier whose axis is in horizontal orientation. Therefore, the turning light guides can be omitted and the overall height of the receiver mounted vertically in the mold water chamber can be further shortened.

For the longer section without the side window and the two ends of the long scintillator of side-window type, magnesia is used as the reflective layer, hence the photon collection efficiency of the main body of the long scintillator can be significantly improved; for the rest of the long scintillator, fluorine plastic, which provides better photon reflection efficiency than metal surface, is used as the reflective layer, and the space between the fluorine plastic and the long scintillator is filled with silicone grease as the optical coupling material, hence a higher overall photon collection efficiency can be guaranteed for the long scintillator.

### Brief Description of the Drawings

Figures 1 to 3 illustrate the present invention.
Figure 1 is a schematic diagram illustrating the installation of a molten steel level measuring system for a mold in which a long sodium iodide scintillator of end-window type and turning light guides are adopted.
Figure 2 is a schematic diagram illustrating the installation of a molten steel level measuring system for a mold in which a long sodium iodide scintillator of side-window type is adopted.
Figure 3 is a schematic diagram illustrating a structure of a long sodium iodide scintillator of side-window type.

### Detailed Description of the Invention

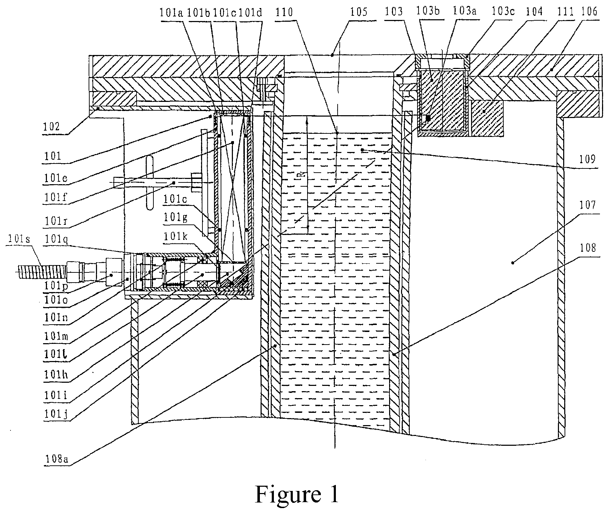

A first embodiment of the present invention is shown in Figure 1. In Figure 1, a receiver 101 is pushed into a receiver mounting box 102 within a mold water chamber 107 on one side of the mold 105. A cylindrical source box 103 is mounted vertically into a source mounting box 104 within the mold water chamber 107 through the flange 106 of the mold 105. When the molten steel level measuring device for the mold is working, the cesium-137 dot source 103a in the source box 103 is close to one side of a copper tube 108 in the mold 105, and irradiates a long sodium iodide scintillator 101f mounted vertically in the receiver 101 which is close to the opposite side of the copper tube 108a. The sodium iodide scintillator 101f is an enclosed long scintillator of end-window type with magnesia as the reflective layer, the photons generated by the interaction between the gamma γ ray from the cesium-137 dot source 103a and the sodium iodide scintillator 101f are emitted into the turning light guides through a silicone gel sheet 101g on the end-window of the sodium iodide scintillator 101f. The silicone gel sheet 101g is used as the optical coupling material. The turning light guides include a piece of transparent glass 101h and a polytetrafluoroethene (PTFE) reflector 101i, each of which has a bevel surface whose normal line meets the vertical at an angle of 45°, and the two bevel surfaces are bonded with silicone grease which is used as the optical coupling material. The photons are turned by the bevel surfaces, and are transmitted, through a silicone gel sheet 101k which is used as the optical coupling material, into a photo-multiplier 101l whose axis is in horizontal orientation. The electronic signals generated from the photons in the photo-multiplier 1011 are amplified and shaped by an electronic circuit board 101n connected to the photo-multiplier 101l in tandem, and are transmitted to a signal processor (not shown in the figure) via sockets 101o and 101p and signal cable 101s. The signal processor processes the amplified and shaped electronic signals, and provides a height value indicating the level 110 of molten steel 109. The use of turning light guides 101h and 101i enables horizontal positioning of the photo-multiplier 1011, the electronic circuit board 101n and the sockets 101o and 101p within the receiver 101. The overall height of the receiver 101 is therefore shortened and a comparatively long sodium iodide scintillator can be adopted to cover the full molten steel level measurement range R in the mold as well as to enhance the measurement sensitivity. The main body of the housing of the receiver 101 includes a vertical cylinder 101e and a horizontal cylinder 101q which are welded together. The receiver 101 is assembled by: embedding the protruding part of the transparent glass 101h into the recess in the PTFE reflector so as to form the turning light guides, attaching the silicone gel sheets with silicone grease 101g and 101k to the two transparent surfaces of the light guides, putting the light guides onto an elastic pad 101j in the vertical cylinder 101e; putting the scintillator 101f with a shock absorbing ring 101c into the vertical cylinder 101e, screwing an upper lid 101a onto the vertical cylinder 101e with a seal ring 101d after mounting a thrust bearing 101b on the scintillator 101f to prevent the scintillator 101f from rotating, and then mounting the photo-multiplier 1011 with a shock absorbing "O" shape ring 101m, the electronic circuit board 101n, the socket 101o and the socket 101p with cable 101s into the horizontal cylinder 101q. The receiver 101 is simple in structure and easy to be assembled. The receiver 101 is positioned in the receiver mounting box 102 via a handle 101r. The shadow lead shield 103b in the cylindrical source box 103 shields the cesium-137 dot source 103a. The installation and removal of the source box 103 can be realized quickly by using a handle 103c of the source box 103, and the operation distance from the dot source 103a is also thereby increased. The source box 103 can be rotated by 180° in the source mounting box 104 by using the handle 103c, thereby placing the cesium-137 dot source 103a between the lead shield 103b in the source box 103 and an additional shield 111 in the mold 105, and thus reducing the radiation dose rate when operators' hands reach into the copper tube of the mold before pouring starts.

According to a conventional approach, the space between the metal housing of the receiver and the large naked sodium iodide scintillation crystal whose long axis is mounted vertically in the mold water chamber is filled with a layer of gel as light transmission and shock absorption materials, and the interior of the metal housing is used as the photon reflective layer. However, the interior of the metal housing shows low efficiency in reflecting photons, especially for large scintillation crystal in which photons shall impinge on the interior of the metal housing for multiple times before reaching the photon emission window. Besides, the gel layer needs to fully cover the large sodium iodide scintillation crystal and be integrated with light guides of the same material, which makes the structure and assembly process of the receiver very complicated. In addition, the gel light guides tend to attract contaminant on the surface and are difficult to clean, which in turn affects the light transmission efficiency. According to the present invention, a well enclosed long scintillator (e.g. a sodium iodide scintillator) of end-window type is mounted as the detector in the mold water chamber in its long axis, and magnesia is normally used as the reflective layer of the long scintillator. Further, photons emitted from the end window are coupled by turning light guides to a photo-multiplier whose axis is in horizontal orientation. In addition, the electronic circuit boards including the high-voltage power source circuit and the amplifying and shaping circuit are connected in tandem behind the photo-multiplier. In this way, the overall height of the receiver is shortened so that the limited interior space of the mold water chamber may accommodate a long sodium iodide scintillator covering the full molten steel level measurement range and that the measurement sensitivity can be enhanced. Furthermore, the photon reflection efficiency of the reflective layer of magnesia is higher than that of the interior of receiver housing which photons should travel through the gel layer to reach, especially for the long scintillator in which photons should impinge on side walls for multiple times before reaching the emission window. And it is easy to purchase the merchandise of an enclosed scintillator (e.g. a sodium iodide scintillator) of end-window type with magnesia as the reflective layer, easy to maintain the transparency of the glass end window of the scintillator, and also easy to transport and store the scintillator and to mount the scintillator in the receiver. The structure of the receiver is also relatively simply with such kind of scintillator.

The assembly manner of the enclosed long scintillator of end-window type with magnesia as the reflective layer, as well as the assembly manner of the long scintillator of side-window type with magnesia mainly as the reflective layer and a glass window on one side wall, as described in the preceding description, can be applied to sodium iodide, cesium iodide, BGO and all kinds of organic scintillators.

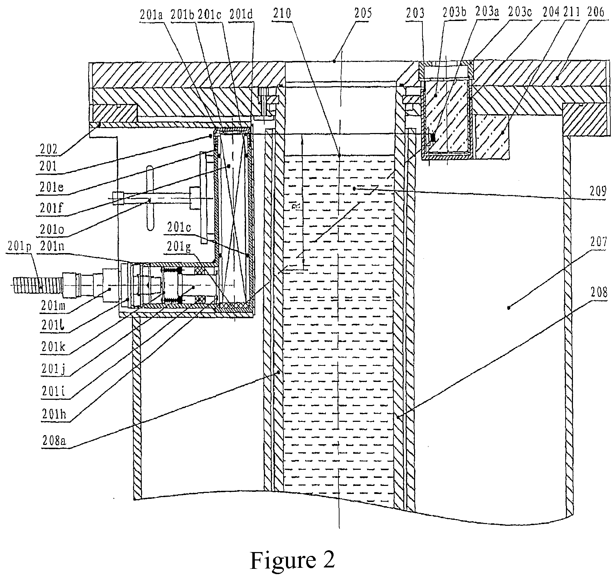

A second embodiment of the present invention is shown in Figure 2. In Figure 2, a receiver 201 is pushed into a receiver mounting box 202 within a mold water chamber 207 on one side of the mold 205. A cylindrical source box 203 is mounted vertically into a source mounting box 204 within the mold water chamber 207 through the flange 206 of the mold 205. When the molten steel level measuring device for the mold is working, the cesium-137 dot source 203a in the source box 203 is close to one side of a copper tube 208 in the mold 205, and irradiates a long sodium iodide scintillator 201f mounted vertically in the receiver 201 which is close to the opposite side of the copper tube 208a. The reflective layer of the scintillator 201f is mainly made of magnesia and the length of the scintillator 201f covers the full molten steel level measurement range R. The scintillator 201f has a glass photon emission window on one side wall. The photons generated by the interaction between y ray and the scintillator 201f are emitted, through the emission window and a silicone gel sheet 201h, into a photo-multiplier 201j whose axis is in horizontal orientation. The silicone gel sheet 201h is used as the optical coupling material. And the photo-multiplier 201j is equipped with a shock absorbing "O" shape ring 201 i. The electronic signals generated from the photons in the photo-multiplier 201j are amplified and shaped by an electronic circuit board 201k connected to the photo-multiplier 201j in tandem, and are then transmitted to a signal processor (not shown in the figure) via sockets 2011 and 201m and a signal cable 201p. The signal processor processes the amplified and shaped electronic signals, and provides a height value indicating the level 210 of molten steel 209. The parts mentioned above from the scintillator 201f to the electronic circuit board 201k are mounted in the receiver housing which includes a vertical cylinder 201e and a horizontal cylinder 201n welded together, a seal ring 201d, an upper lid 201 a and a socket 2011; meanwhile, a thrust bearing 201b that prevents the scintillator 201f from rotating, a shock absorbing "O" shape ring 201c and an elastic pad 201g are also mounted in the receiver housing. The receiver 201 is simple in structure and easy to be assembled. The receiver 201 is positioned in the receiver mounting box 202 via a handle 201o. The shadow lead shield 203b in the cylindrical source box 203 shields the cesium-137 dot source 203a. The installation and removal of the source box 203 can be realized quickly by using a handle 203c of the source box 203, and the operation distance from the dot source 203a is also increased. The source box 203 can be rotated by 180° in the source mounting box 204 by using the handle 203c, thereby placing the cesium-137 dot source 203a between the lead shield 203b in the source box 203 and an additional shield 211 in the mold 205, and thus reducing the radiation dose rate when operators' hands reach into the copper tube of the mold before pouring starts. Compared with the first embodiment, the second embodiment omits the turning light guides and further shortens the overall height of the receiver, and therefore, an even longer sodium iodide scintillator can be adopted to further enhance the measurement sensitivity of the molten steel level measurement in the mold and to expand the measurement range of the molten steel level measurement in the mold.

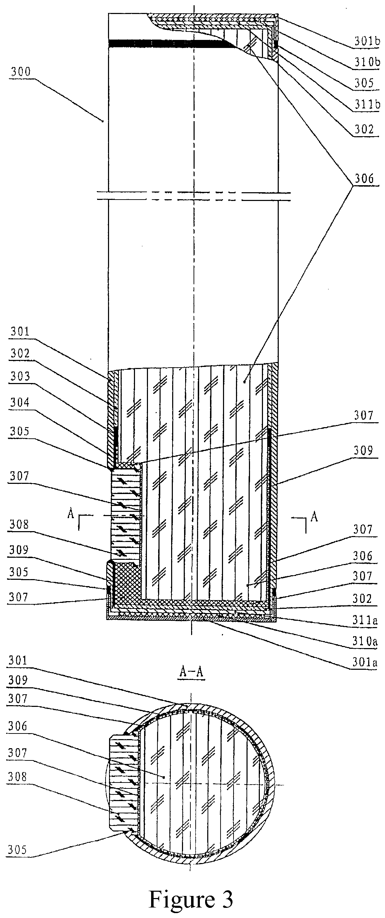

A scintillator of side-window type in accordance with the present invention is shown in Figure 3. The crystal 300 in the Figure 3 is divided into a longer upper section and a shorter lower section with a glass side window 308 by a PTFE raw material ring 303 which coils around the cylindrical surface of the sodium iodide scintillator 306 for positioning and separation. The upper section uses magnesia 302 as the reflective layer, and the lower sectionuses a PTFE board 304 and a PTFE tube 309 as the reflective layer. The space between the PTFE board 304, the PTFE tube 309, the glass window 308 and the sodium iodide scintillator 306 is filled with transparent silicone gel 307 as the optical coupling material. The surface of the sodium iodide scintillator 306 is polished in the area facing the glass window 308 and rubbed rough in the remaining area. In the assembly procedure of the crystal 300, the glass window 308 with a protruding part shall be embedded from the inside of a metal housing 301 into an opening on the side wall of the metal housing 301 and attached tightly to the metal housing 301 with epoxy glue 305. The use of the protruding part is to prevent the glass window 308 from being forced apart from the metal housing 301 when the crystal 300 expands in an environment of high temperature. When the side window 308 is attached tightly to the metal housing, the PTFE board 304 shall also be mounted within the metal housing. After that, the sodium iodide scintillator 306 with the PTFE raw material ring 303 is placed into the metal housing 301 through the upper end of the metal housing and the magnesia 302 is filled. A plane pad 311b and an elastic pad 310b are then mounted on the upper end, and an upper lid 301b is screwed and glued onto the metal housing 301. After that, the crystal 300 shall be turned upside-down, the space between the metal housing 301, the glass side window 308, the PTFE board 304 and the sodium iodide scintillator 306 shall be filled with transparent silicone gel 307 and the PTFE tube 309 shall be mounted. After eliminating air from the transparent silicone gel 307 and allowing the transparent silicone gel 307 to solidify by applying high temperature, a magnesia reflective layer 302 shall be applied to the end of the silicone gel 307 and an end lid 301a shall be screwed and glued onto the metal housing 301 on this end after a plane pad 311a and an elastic pad 310a are mounted.

### Industrial Applicability

The present invention adopts the enclosed long scintillator of end-window type or of side-window type as the detector in the mold water chamber, the scintillator has a normal reflective layer of magnesia and is mounted vertically in its long axis in the water chamber, therefore the limited room within the mold water chamber may accommodate a long sodium iodide scintillator covering the full molten steel level measurement range and the measurement sensitivity can be enhanced.

## Claims

1. A detector applied to molten steel level measuring, wherein
the detector is a long scintillator (300) of side-window type, and
the long scintillator is equipped with a reflective layer comprising magnesia mainly and a glass window (308) on one side wall;
**characterized in that**:
a longer section of the long scintillator without the glass side window and two ends of the long scintillator adopt magnesia (302) as reflective layer; and
a cylindrical surface of a shorter section of the long scintillator with the glass side window (308) adopts fluorine plastic as the reflective layer;
wherein the magnesia reflective layer and the fluorine plastic reflective layer are separated by a polytetrafluoroethene raw material ring (303) which coils around the cylindrical surface of the long scintillator.

2. A molten steel level measuring device for a continuous casting machine mold, comprising:
a receiver (201) mounted in a receiver mounting box (202) in a mold water chamber (207), the receiver being close to one side of a copper tube (208a) in the continuous casting machine mold; a gamma radioactive source mounted in a source mounting box (204) in the mold water chamber (207), the gamma radioactive source being close to the opposite side of the copper tube (208); and a signal processor;
**characterized in that**: the receiver (201) comprises a detector (201f) as claimed in claim 1, and a long axis of the detector (201f) is mounted vertically.

3. The device as claimed in claim 2, wherein the source mounting box comprises: a source box comprising the gamma radioactive source, a lead shield adapted to shield the gamma radioactive source and a handle by which the source box is installed, removed or rotated in the source mounting box.

4. The device as claimed in claim 2 or 3, wherein the receiver is positioned in the receiver mounting box via a handle.

## Patentansprüche

1. Zur Nuancenmessung von geschmolzenem Stahl angewendeter Detektor, wobei:
der Detektor ein langer Szintillator (300) vom Typ Seitenfenster ist und
der lange Szintillator mit einer reflektierenden Schicht ausgerüstet ist, umfassend hauptsächlich Magnesium und ein Glasfenster (308) auf einer Seitenwand;
**dadurch gekennzeichnet, dass**:
ein längerer Abschnitt des langen Szintillators ohne das gläserne Seitenfenster und zwei Enden des langen Szintillators Magnesium (302) als reflektierende Schicht übernehmen; und
eine zylindrische Fläche eines kürzeren Abschnitts des langen Szintillators mit dem gläsernen Seitenfenster (308) Fluorkunststoff als die reflektierende Schicht übernimmt;
wobei die reflektierende Magnesiumschicht und die reflektierende Fluorkunststoffschicht durch einen Ring (303) aus Polytetrafluorethan-Rohmaterial getrennt sind, das kreisförmig um die zylindrische Fläche des langen Szintillators abgelegt ist.

2. Vorrichtung zur Nuancenmessung von geschmolzenem Stahl für ein auf der Maschine geformtes Stranggießen, umfassend;
eine Aufnahme (201), die in einer Aufnahmemontagebox (202) in einer Schmelzwasserkammer (207) montiert ist, wobei die Aufnahme nahe an einer Seite einer Kupferröhre (208a) in dem auf der Maschine geformten Stranggießen ist; eine gamma-radioaktive Quelle, die in einer Quellenmontagebox (204) in der Schmelzwasserkammer (207) montiert ist, wobei die gamma-radioaktive Quelle nahe an der entgegengesetzten Seite der Kupferröhre (208) ist; und einen Signalprozessor;
**dadurch gekennzeichnet, dass**: der Empfänger (201) einen Detektor (201) wie in Anspruch 1 beansprucht umfasst und eine lange Achse des Detektors (201) vertikal montiert ist.

3. Vorrichtung wie in Anspruch 2 beansprucht, wobei die Quellenmontagebox umfasst: eine Quellenbox, umfassend die gamma-radioaktive Quelle, eine Bleiabschirmung, die zum Abschirmen der gamma-radioaktiven Quelle geeignet ist, und einen Griff, mit dem die Quellenbox installiert, entfernt oder in der Quellenmontagebox rotiert wird.

4. Vorrichtung gemäß Anspruch 2 oder 3, wobei der Empfänger in der Empfängermontagebox über einen Griff positioniert ist.

## Revendications

1. Détecteur appliqué à la mesure du niveau d'acier fondu, dans lequel :
le détecteur est un scintillateur long (300) du type à fenêtre latérale ; et
le scintillateur long est équipé d'une couche réfléchissante comprenant essentiellement de la magnésie et d'une fenêtre en verre (308) sur une paroi latérale,
**caractérisé en ce que** :
une section plus longue du scintillateur long sans la fenêtre latérale en verre et deux extrémités du scintillateur long sont dotées de magnésie (302) en tant que couche réfléchissante ; et
une surface cylindrique d'une section plus courte du scintillateur long avec la fenêtre latérale en verre (308) est dotée d'une matière plastique fluorée en tant que couche réfléchissante, dans lequel :
la couche réfléchissante en magnésie et la couche réfléchissante en matière plastique fluorée sont séparées par une enveloppe annulaire (303) dont le matériau de base est du polytétrafluoroéthylène, laquelle enveloppe annulaire est enroulée autour de la surface cylindrique du scintillateur long.

2. Dispositif de mesure de niveau d'acier fondu pour un moule de machine à coulée continue, comprenant :
un réceptacle (201) monté dans un logement de montage de réceptacle (202) dans une chambre d'eau de moule (207), le réceptacle étant proche d'un côté d'un tube en cuivre (208a) dans le moule de machine à coulée continue ; une source radioactive gamma montée dans un logement de montage de source (204) dans la chambre d'eau de moule (207), la source radioactive gamma étant proche du côté opposé du tube en cuivre (208) ; et un processeur de signal ;
**caractérisé en ce que** : le réceptacle (201) comprend un détecteur (201f) selon la revendication 1, et un axe long du détecteur (201f) est monté verticalement.

3. Dispositif selon la revendication 2, dans lequel le logement de montage de source comprend : un logement de source comprenant la source radioactive gamma, une protection en plomb adaptée pour assurer une protection vis-à-vis de la source radioactive gamma et un moyen de manipulation au moyen duquel le logement de source est installé dans le logement de montage de source, en est enlevé ou y est tourné.

4. Dispositif selon la revendication 2 ou 3, dans lequel le réceptacle est positionné dans le logement de montage de réceptacle via un moyen de manipulation.
